# EUROPÄISCHE PATENTSCHRIFT

(11) **EP 4 678 511 B1**
(45) Veröffentlichungstag und Bekanntmachung des Hinweises auf die Patenterteilung: **09.09.2026**
(21) Anmeldenummer: 25188200.7
(22) Anmeldetag: 08.07.2025
(51) Int. Cl.: B62D 5/00

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 12.07.2024 BE 202405452
(43) Veröffentlichungstag der Anmeldung: 14.01.2026
(73) Patentinhaber: thyssenkrupp Presta AG, 9492 Eschen (LI); thyssenkrupp AG, 45143 Essen (DE)
(72) Erfinder: Melsa, Philip, 6850 Dornbirn (AT); Heitz, Thomas Werner, 9493 Mauren (LI)
(74) Vertreter: thyssenkrupp Intellectual Property GmbH

(56) Entgegenhaltungen:
- DE-A1- 102021 201 640

## Beschreibung

### Stand der Technik

Die Erfindung betrifft eine Lenksäule für ein Kraftfahrzeug, umfassend eine relativ zu einem Gehäuse um ihre Längsachse drehbar gelagerte Lenkwelle und einen zur Begrenzung der Rotation der Lenkwelle relativ zum Gehäuse ausgebildeten Umdrehungsbegrenzer, der ein an dem Gehäuse fixiertes, in einer Gurtrichtung langgestrecktes und quer dazu in seiner Gurtbreite flach erstrecktes, flexibel verformbares Gurtelement aufweist, welches auf einem mit der Lenkwelle verbundenen Wickelkern aufwickelbar ist, und welches ein Gewebe aus Kunststofffasern aufweist, die in Gurtrichtung verlaufende Kettfäden umfassen, die mit quer zur Gurtrichtung verlaufenden Schussfäden verwoben sind.

Bei einem Steer-by-Wire-Lenksystem wird die manuelle Rotation der Lenkwelle zur Eingabe eines Lenkbefehls mittels eines Drehsensors, der mindestens einen Drehwinkel- und/oder Drehmomentsensor aufweist, erfasst und in ein elektrisches Steuersignal zur Ansteuerung von elektrischen Lenkaktoren umgesetzt. Dadurch, dass die Lenkwelle anders als bei einem konventionellen Lenksystem keine mechanische Kopplung mit den Rädern aufweist, wird die Drehung der Lenkwelle nicht durch den mechanischen Endanschlag der Räder bei Erreichen des maximalen Lenkeinschlags begrenzt. Um dennoch ein zu starkes Einlenken zu vermeiden und auch ein realistisches Lenkgefühl zu simulieren, ist gattungsgemäß vorgesehen, den maximal möglichen Drehwinkel des Lenkrads mittels eines Umdrehungsbegrenzers zu beschränken. Dieser bildet eine Begrenzungseinrichtung mit einem Endanschlag zur Begrenzung der maximal möglichen Rotation der Lenkwelle.

Eine gattungsgemäße Lenksäule ist aus der DE 10 2021 201 640 A1 bekannt, mit einer in einem Gehäuse, dem Lenksäulengehäuse, drehbar gelagerten Lenkwelle. Diese weist einen Umdrehungsbegrenzer mit einem in einer Gurtrichtung flach langgestreckten, flexiblen Gurtelement auf, welches auf einem Wickelkern aufwickelbar ist, der mit der Lenkwelle verbunden ist. In einem von diesem Wickelkern abstehenden, nicht aufgewickelten Gurtabschnitt ist das Gurtelement in der Gurtrichtung, d.h. in seiner Längsrichtung, zugfest an dem Gehäuse fixiert. Die Funktion sieht vor, dass das Gurtelement durch einen definierten Drehwinkel der Lenkwelle relativ zum Gehäuse, der in der Regel mehrere Umdrehungen umfassen kann, soweit auf dem Wickelkern aufgewickelt werden kann, bis der freie Gurtabschnitt zwischen dem Wickelkern und dem Gehäuse straff gespannt ist. Dadurch wird ein weiteres Aufwickeln gestoppt, und eine Umdrehungsbegrenzung realisiert.

Durch das Aufwickeln in den beiden möglichen Drehrichtungen kann eine symmetrische Umdrehungsbegrenzung erfolgen.

Vorteile des gattungsgemäßen Umdrehungsbegrenzers sind der zuverlässige Betrieb, die flexible Gestaltung bezüglich des möglichen Drehbereichs, und die kompakte Bauform. Um dies zu realisieren, muss das Gurtelement hohe Anforderungen erfüllen. So ist eine hohe spezifische Zugfestigkeit erforderlich, um die hohe am Anschlag wirkende Zugkraft bei einem möglichst geringen Gurtquerschnitt sicher aufnehmen zu können. Gleichzeitig muss eine hohe Flexibilität bei geringer Elastizität quer zur Längserstreckung gegeben sein, d.h. eine geringe Biegesteifigkeit, damit das Gurtelement innerhalb des gesamten möglichen Drehbereichs gleichmäßig und ohne merkliche elastische Rückstellkräfte auf dem Wickelkern aufwickelbar ist. Von besonderer Bedeutung ist weiterhin, dass das Gurtelement über die gesamte Lebensdauer des Fahrzeugs dimensionsstabil bleibt, und insbesondere durch die im Betrieb auftretenden Lastwechsel und Temperaturschwankungen keine Längenänderungen erfährt, die unmittelbar eine nicht akzeptable Veränderung des Drehbereichs erzeugen würden.

Es ist bekannt, das Gurtelement aus einem Gewebe aus Kunststofffasern auszubilden, die in Gurtrichtung verlaufende Kettfäden umfassen, die mit quer zur Gurtrichtung verlaufenden Schussfäden verwoben sind. Dabei erfordert die Anwendung in einem Umdrehungsbegrenzer die Einhaltung der vorgenannten, klar definierten Eigenschaften des Gurtelements, die mit engen Toleranzen über die gesamte Fahrzeuglebensdauer eingehalten werden müssen. Wesentlich ist, dass möglichst keine Veränderung der Gurtlänge auftritt, die unmittelbar mit dem Dreh- bzw. Begrenzungswinkel korreliert ist.

Im Betrieb wirken auf den Gurt jedoch erhebliche Temperaturschwankungen und extreme Belastungen, die bei einem einfachen Einsatz von bisher bekannten Kunststoffen, selbst von extrem belastbaren Hochleistungs-Polymeren zu einer nachteiligen strukturellen Degradation führen, die zu einer nicht akzeptablen Verkürzung führen kann.

Angesichts der vorangehend erläuterten Problematik ist es eine Aufgabe der vorliegenden Erfindung, verbesserte Funktions- und Betriebseigenschaften der Umdrehungsbegrenzung zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine relativ zu einem Gehäuse um ihre Längsachse drehbar gelagerte Lenkwelle und einen zur Begrenzung der Rotation der Lenkwelle relativ zum Gehäuse ausgebildeten Umdrehungsbegrenzer, der ein an dem Gehäuse fixiertes, in einer Gurtrichtung langgestrecktes und quer dazu in seiner Gurtbreite flach erstrecktes, flexibel verformbares Gurtelement aufweist, welches auf einem mit der Lenkwelle verbundenen Wickelkern aufwickelbar ist, und welches ein Gewebe aus Kunststofffasern aufweist, die in Gurtrichtung verlaufende Kettfäden umfassen, die mit quer zur Gurtrichtung verlaufenden Schussfäden verwoben sind, ist erfindungsgemäß vorgesehen, dass die Kettfäden erste Kettfäden aufweisen, die ein erstes Polymermaterial aufweisen, und zweite Kettfäden aufweisen, die ein zweites Polymermaterial aufweisen.

Das Gurtelement weist definitionsgemäß in seiner Gurtrichtung eine Gurtlänge auf, und quer dazu eine Gurtbreite, die kleiner ist als die Gurtlänge. Das Gurtelement ist als flaches Gurtelement ausgebildet, welches senkrecht zur Gurtlänge und Gurtbreite eine deutlich kleinere Gurtdicke aufweist, die einem Bruchteil der Gurtbreite entspricht.

Erfindungsgemäß ist das Gurtelement aus einem hybrid ausgestalteten Gewebe ausgebildet. Dieses weist definitionsgemäß in der Gurtrichtung verlaufende Kettfäden aus zwei unterschiedlichen Polymeren mit unterschiedlichen, spezifischen funktionalen Eigenschaften auf. Anders ausgedrückt wird aus einem Hybridgewebe, welches in der Gurtrichtung verlaufende Kettfäden aus spezifischen, unterschiedlichen Kunststoffen aufweist, ein Hybridgurt bereitgestellt.

Die für die erfindungsgemäße Anwendung in einem Umdrehungsbegrenzer erforderlichen spezifischen Eigenschaften des Gurts werden maßgeblich durch die in Längsrichtung verlaufenden Kettfäden bestimmt. Im Betrieb ist der Gurt hohen, wechselnden Zugbelastungen mit impulsartigen Lastspitzen, und gleichzeitig hohen Biegebeanspruchungen beim Auf- und Abwickeln ausgesetzt. Hinzu kommt die thermische Beanspruchung. Dabei ist es wesentlich, dass die Eigenschaften des Gurts im Dauerbetrieb über die Lebensdauer der Lenksäule möglichst konstant bleiben. Insbesondere müssen eine Verminderung der Zugfestigkeit und eine Längenveränderung, die zu einer Beeinträchtigung der Begrenzungsfunktion führen könnten, sicher ausgeschlossen werden.

Erfindungsgemäß werden mindestens zwei verschiedene Sorten von Kettfäden eingesetzt, die aus unterschiedlichen Polymermaterialien ausgebildet sind, welche jeweils unterschiedliche, spezifisch an die Anforderungen in einem Umdrehungsbegrenzer angepasste definierte Materialeigenschaften aufweisen. Potentielle Zielkonflikte, die durch Einsatz eines einzigen Polymers nicht gelöst werden können, beispielsweise hohe Dauerzugfestigkeit bei gleichzeitig hoher thermischer und Dimensionsstabilität und geringer Bruchneigung, können erfindungsgemäß durch separate, speziell im Hinblick auf die einzelnen Anforderungen optimierte Polymerwerkstoffe optimal gelöst werden. Durch die erfindungsgemäße Vereinigung unterschiedlich optimierter Materialien in einer hybriden Anordnung, d.h. in einem erfindungsgemäßen Hybridgurt, können die unterschiedlichen Eigenschaften der verschiedenen Polymermaterialien synergetisch genutzt werden. Dabei können die spezifischen Eigenschaften des einen Polymerwerkstoffs potentielle spezifische Schwächen des anderen Polymerwerksoffs praktisch vollständig kompensieren. Darüber hinaus können durch das synergetische Zusammenwirkungen vorteilhafte Betriebseigenschaften des Gurts erreicht werden, die in vorteilhafter Weise über die bloße Addition der unterschiedlichen Werkstoffeigenschaften hinausgehen. Dadurch kann eine maximale Betriebssicherheit realisiert werden.

Ein weiterer Vorteil ist, dass der erfindungsgemäße Hybridgurt bei gleicher Belastbarkeit geringere Abmessungen haben kann als die bekannten Ausführungen, d.h. insbesondere eine geringere Dicke und/oder Gurtbreite. Dadurch kann ein leichterer und kompakterer Aufbau realisiert werden.

Es ist möglich, dass die Kettfäden jeweils als Fasern aus einem einzigen durchgehenden Polymerwerkstoff ausgebildet sind. Darüber hinaus kann es vorteilhaft sein, dass in die Matrix des Polymerwerkstoffs weitere Materialien eingebettet sind zur Ausbildung eines polymerbasierten Verbundwerkstoffs. Beispielsweise können dem Polymer Verstärkungselemente in Form von Kohlefasern, Nanotubes oder dergleichen zugesetzt sein. Dadurch ist eine weitere funktionale Optimierung möglich.

Es ist besonders vorteilhaft, dass die Kettfäden erste Kettfäden aus einem hochmolekularen Polymer und zweite Kettfäden aus einem Flüssigkristallpolymer aufweisen.

Ein hochmolekulares Polymer (engl.: high molecular weight polymer = HMW-polymer) weist definitionsgemäß eine mittlere molare Masse von ca. 500 bis 1000 kg/mol oder höher auf. Bei einer höheren Molmasse von bis zu 6000 kg/mol spricht man von einem ultra-hochmolekularen Polymer (engl.: ultra-high molecular weight polymer = UHMW-polymer).

Ein Flüssigkristallpolymer (FKP, engl.: liquid crystal polymer = LCP) weist eine stäbchenförmige Molekülform auf, die auch im flüssigen Zustand erhalten bleibt. Es zeichnet sich durch hohe Festigkeit, Dimensions- und Temperaturstabilität bei relativ geringer Dichte aus.

Konkret stellen die ersten Kettfäden aus einem hochmolekularen Polymer die erforderliche hohe Festigkeit bereit, während die zweiten Kettfäden aus einem Flüssigkristallpolymer eine hohe thermische Stabilität und eine hohe Dimensionsstabilität des Gurtelements sicherstellen.

Die erfindungsgemäße Kombination bewirkt eine synergetische Verstärkung der genannten positiven Eigenschaften der beiden Polymerwerkstoffe, wobei die potentiell nachteiligen Eigenschaften, beispielsweise die potentiell eine Verkürzung bewirkende geringere Dimensionsstabilität des hochmolekularen Polymers und die potentielle Bruchneigung des Flüssigkristallpolymers bei häufiger Knickbelastung, durch die erfindungsgemäße Kombination effektiv kompensiert werden.

Auf diese Weise können durch die erfindungsgemäße Kombination eine vorteilhaft hohe Betriebssicherheit und über die Lebensdauer gleichbleibende funktionale Eigenschaften des Gurtelements und damit des Umdrehungsbegrenzers gewährleistet werden.

Es kann bevorzugt vorgesehen sein, dass das hochmolekulare Polymer ein ultrahochmolekulares Polyethylen aufweist. Ultrahochmolekulares Polyethylen - auch als UHMW-PE ( = Ultra-High-Molecular-Weight-Polyethylene) ist ein extrem langkettiges thermoplastisches Polyethylen mit einer Molekularmasse zwischen circa 2,5 und 7,5 Millionen amu (atomar mass units). Es weist eine extrem hohe Festigkeit und Abriebfestigkeit auf, die bis zu 15-mal höher ist als die von Kohlenstoffstahl, und einen niedrigen Reibungskoeffizient, der vergleichbar ist mit Polytetrafluorethylen (PTFE, Handelsname: Teflon ^{®}). Außerdem weist es eine extrem niedrige Feuchtigkeitsabsorptionsrate auf, die sicherstellt, dass im Betrieb keine signifikanten Änderungen der Eigenschaften bzw. Abmessungen auftreten.

Es kann vorgesehen sein, dass das Flüssigkristallpolymer ein aromatisches Polyamid oder ein aromatisches Polyester aufweist. Die Auswahl des Flüssigkristallpolymers kann bevorzugt an die Eigenschaften des hochmolekularen Polymers angepasst erfolgen. Es hat in jedem Fall eine hohe Temperatur- und Dimensionsstabilität über die gesamte Lebensdauer, so dass sichergestellt ist, dass keine Verkürzung des Gurtelements auftritt.

Es ist möglich, dass erste Kettfäden aus genau einem hochmolekularen Polymer und zweite Kettfäden aus genau einem Flüssigkristallpolymer verwendet werden. Dadurch wird die strukturierte Bereitstellung eines erfindungsgemäß hybriden Gewebes mit definierten Eigenschaften vereinfacht. Darüber hinaus ist es jedoch auch denkbar und möglich, mehr als ein hochmolekulares Polymer und/oder ein Flüssigkeitspolymer einzusetzen, und zwar in ersten und zweiten Kettfäden, oder alternativ in dritten oder weiteren unterschiedlichen Kettfäden.

Es ist bevorzugt, dass der Anteil der ersten Kettfäden relativ zum Anteil der zweiten Kettfäden definiert vorgegeben wird. Beispielsweise kann ein Verhältnis von 1:1 realisiert sein, bei dem die Anzahl der ersten und zweiten Kettfäden gleich oder zumindest im Wesentlichen gleich ist. Es können aber auch abweichende Verhältnisse realisiert sein, die in Bezug auf eine synergetische Wirkung im Hinblick auf einen Ausgleich der spezifischen Vor- und Nachteile der beiden Polymere optimiert sind.

Es kann vorzugsweise vorgesehen sein, dass eine Mehrzahl von ersten Kettfäden quer zur Gurtrichtung nebeneinander im Wechsel mit zweiten Kettfäden angeordnet sind. Die relative Anzahl der ersten und zweiten Kettfäden kann zur Vorgabe von definierten Eigenschaften des Gurtelements vorgegeben werden, beispielsweise durch eine wechselnde Anordnung in einem Verhältnis in einem Bereich zwischen 7:10 und 13:10.

Es ist bevorzugt, dass die ersten und zweiten Kettfäden jeweils als Faserstränge aus einer Mehrzahl von Fasern ausgebildet sind. Dadurch kann die Flexibilität und Knickfestigkeit optimiert werden.

Es ist vorteilhaft dass die Schussfäden aus einem von dem Kunststoff der Kettfäden unterschiedlichen Polymermaterial ausgebildet sind. Die mit den ersten und zweiten Kettfäden verwobenen Schussfäden können aus einem einzigen Polymer ausgebildet sein, bevorzugt aus einem thermoplastischen Polymer wie beispielsweise Polyester oder dergleichen.

Es kann bevorzugt vorgesehen sein, dass das Gewebe eine Köperbindung, beispielsweise eine Köperbindung 2/2 aufweist. Diese zeichnet sich dadurch aus, dass ein Schussfaden jeweils oberhalb von zwei Kettfäden, und dann unterhalb von zwei folgenden Kettfäden verläuft, wobei aufeinander folgende Schussfäden jeweils um einen Kettfaden zueinander versetzt sind.

### Beschreibung der Zeichnungen

Vorteilhafte Ausführungsformen der Erfindung werden im Folgenden anhand der Zeichnungen näher erläutert. Im Einzelnen zeigen:
- Fig. 1: eine erfindungsgemäße Lenksäule in einer schematischen perspektivischen Ansicht,
- Fig. 2: die Lenksäule gemäß Figur 1 in einer weiteren perspektivischen Ansicht,
- Fig. 3: einen Abschnitt eines erfindungsgemäßen Gurtelements,
- Fig. 4: eine schematische, vergrößerte Detailansicht des erfindungsgemäßen Gurtelements gemäß Fig.3,
- Fig. 5: eine schematische, perspektivische Ansicht des Gewebes des Gurtelements gemäß Fig.3.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

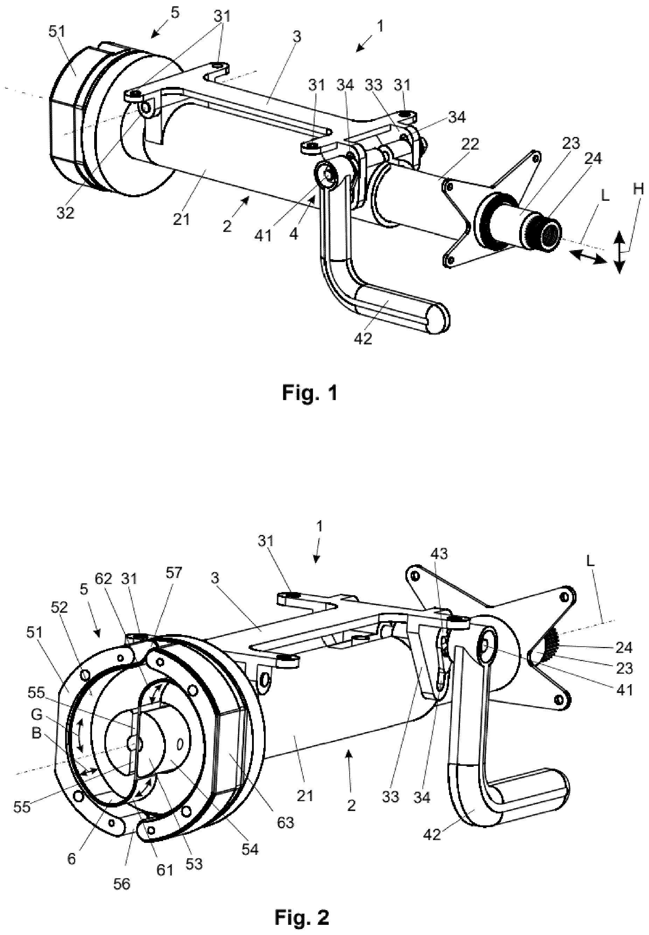

Fig. 1 und 2 zeigen in unterschiedlichen perspektivischen Ansichten eine Lenksäule 1 eines Steer-by-Wire-Lenksystems, in Fig. 1 von links hinten, und in Fig. 2 von links vorn, jeweils bezogen auf die Fahrtrichtung.

Die Lenksäule 1 umfasst eine Stelleinheit 2, die ein Gehäuse, nämlich ein Lenksäulengehäuse 21 aufweist, welches auch als Manteleinheit oder äußeres Mantelrohr bezeichnet wird. In dem Lenksäulengehäuse 21 ist ein Mantelrohr 22 aufgenommen, in dem eine Lenkwelle 23 um die Längsachse L drehbar gelagert ist. Am bezüglich der Fahrtrichtung hinteren, dem Fahrer zugewandten Ende weist die Lenkwelle 23 einen Anschlussabschnitt 24 zur Anbringung eines hier nicht dargestellten Lenkrads auf. Zur Längsverstellung des Lenkrads ist das Mantelrohr 22 relativ zum Lenksäulengehäuse 21 in Richtung der Längsachse L teleskopartig verstellbar, wie mit dem Doppelpfeil parallel zur Längsachse L angedeutet ist.

Die Stelleinheit 2 ist von einer Trageinheit 3 gehalten, welche Befestigungsöffnungen 31 aufweist zur Anbringung an einer nicht dargestellten Karosserie eines Kraftfahrzeugs. In einem vorderen Bereich ist das Lenksäulengehäuse 21 an der Trageinheit 3 um eine horizontale, quer zur Längsachse L liegende Schwenkachse 32 verschwenkbar gelagert, wodurch eine Höhenverstellung des rückwärtigen, fahrerseitigen Endes der Lenkwelle 23 in der Höhenrichtung H ermöglicht wird.

Die Trageinheit 3 weist von der Schwenkachse 32 mit Abstand nach hinten zwei Seitenwangen 33 auf, die sich parallel zueinander nach unten erstrecken, und zwischen denen das Lenksäulengehäuse 21 aufgenommen ist.

Eine Spanneinrichtung 4 umfasst einen Spannbolzen 41, der durch in Höhenrichtung H verlaufende Langlöcher 34 durch beide Seitenwangen 33 hindurchgeführt ist. An dem Spannbolzen 41 ist ein Spannhebel 42 befestigt, mit dem der Spannbolzen 41 manuell um seine Achse gedreht werden kann.

Die Spanneinrichtung 4 weist ein Spanngetriebe 43 auf, welches eine Drehung des Spannbolzens 41 um seine Achse in einen Spannhub in Richtung seiner Achse umsetzt, beispielsweise mittels einer an sich bekannten Keilscheiben-, Nocken- oder Kippstiftvorrichtung. Die Spannachse 41 ist über das Spanngetriebe 43 von außen gegen die beiden Seitenwangen 33 abgestützt. Wird der Spannhebel 41 durch manuelle Betätigung des Spannhebels 42 in die eine Richtung in die Spann- oder Fixierstellung gedreht, werden die beiden Seitenwangen 33 gegeneinander angedrückt, und dadurch wird das Lenksäulengehäuse zwischen den Seitenwangen 33 eingespannt, und dadurch relativ zur Trageinheit 3 in Höhenrichtung H fixiert. Dabei wird auch das Mantelrohr 22 in dem Lenksäulengehäuse 21 verspannt, so dass ebenfalls eine Fixierung in Richtung der Längsachse L erfolgt.

Wird der Spannhebel 42 durch eine umgekehrte Drehung in die Lösestellung gebracht, wird der Spannhub aufgehoben, und die Einspannung des Lenksäulengehäuses 21 zwischen den Seitenwangen 33 gelöst. Der Spannbolzen 41 kann dann zur Höhenverstellung in den Langlöchern 34 in der Höhenrichtung H zusammen mit dem Lenksäulengehäuse 21 auf oder ab bewegt werden, und das Mantelrohr 22 kann in Richtung der Längsachse L zur Längsverstellung teleskopierend in das Lenksäulengehäuse 21 nach vorn eingeschoben oder nach hinten herausgezogen werden.

Ein erfindungsgemäß ausgestalteter Umdrehungsbegrenzer 5 ist vorn an der Lenksäule 1 angebracht. Dieser ist in Fig. 2 in einer perspektivischen Ansicht vorn geöffnet dargestellt, um einen Blick ins Innere freizugeben. Der Umdrehungsbegrenzer 5 ist mit einem nicht dargestellten Deckel verschließbar.

Der Umdrehungsbegrenzer 5 weist ein als Trommel 51 ausgebildetes Gehäuse auf, welches einen Teil des Lenksäulengehäuses 21 bildet, mit dem es einstückig ausgebildet, oder fest verbunden ist. Die Trommel 51 ist hohlzylindrisch ausgebildet, mit einem Innenmantel 52, der koaxial zur Längsachse L angeordnet ist.

In der Trommel 51 ist ein fest mit der Lenkwelle 23 verbundener Wickelkern 53 angeordnet, der einen zylindrischen, zur Längsachse L koaxialen Außenmantel 54 hat.

Der Außendurchmesser des Außenmantels 54 ist vorzugsweise kleiner oder gleich dem 0,5-fachen Innendurchmesser des Innenmantels 52.

Der Wickelkern 53 weist einen diametral, quer zur Längsachse L durchgehenden Querschlitz 55 auf, der nach vorn axial offen ist. Der Querschlitz 55 mündet diametral gegenüberliegend in dem Außenmantel 54.

Die Trommel 51 weist zwei einander bezüglich der Längsachse L diametral gegenüberliegende Querschlitze 56, 57 auf, welche Durchgänge vom Innenmantel 52 zur Außenseite der Trommel 51 bilden, und ebenfalls stirnseitig axial offen sind.

Ein Gurtelement 6, welches als geschlossene Schlaufe ausgebildet ist, ist zwischen dem Wickelkern 53 und der Trommel 51 angebracht, wie in Fig. 2 erkennbar ist. Das Gurtelement 6 ist ein hoch flexibles, flaches Band mit einer Gurtbreite, welche an die axiale Breite des Außenmantels 54 angepasst ist, die auch in etwa der axialen Breite des Innenmantels 52 entspricht.

Das Gurtelement 6 weist ein erfindungsgemäßes Gewebe auf, welches weiter unten näher erläutert ist, und hoch flexibel ist, d.h. derart biegeschlaff, so dass bei einer Umbiegung beim Auf- oder Abwickeln quer zu seiner Längserstreckung und seiner Breite keine oder nur eine vernachlässigbar geringe elastische Rückstellkraft auftritt.

Das Gurtelement 6 ist durch den Querschlitz 55 des Wickelkerns 53 quer zur Längsachse L hindurchgeführt, wobei der Querschlitz 55 mit einer Einführfase versehen ist, um eine Beschädigung des Gurtelements 6 wirksam zu verhindern. Dadurch wird eine drehfeste Verbindung des Gurtelements 6 mit dem Wickelkern 53 realisiert. Der auf der einen Seite aus dem Wickelkern 53 radial austretende Bandabschnitt 61 erstreckt sich durch den einen Querschlitz 56 hindurch zur Außenseite der Trommel 51, und der auf der anderen Seite aus dem Wickelkern 53 radial austretende Bandabschnitt 62 erstreckt sich durch den anderen Querschlitz 57 hindurch zur Außenseite der Trommel 51. Die Bandabschnitte 61 und 62 sind durch einen außen um die Trommel 51 herumgeführten Bandabschnitt 63 als geschlossene Schlaufe miteinander verbunden. Dadurch ist das Gurtelement 6 in Umfangsrichtung bezüglich dem Innenmantel 52 fixiert.

Das Gurtelement 6 erstreckt sich als flaches Gurtband über seine Länge in der Gurtrichtung G, die in Fig. 2 schematisch mit den in Längsrichtung liegenden Doppelpfeilen angedeutet ist. Quer dazu weist das Gurtelement 6 eine Gurtbreite B auf (ebenfalls über einen Doppelpfeil in Fig. 2 kenntlich gemacht). Somit erstreckt sich das Gurtelement 6 flächig parallel zur Gurtrichtung G und zur Gurtbreite B.

Das Gurtelement 6 ist senkrecht zur Gurtrichtung G und zur Gurtbreite B flexibel, mit geringer Elastizität, also anders ausgedrückt biegeschlaff ausgebildet. Dadurch wirken beim Aufwickeln auf den Wickelkern 53 praktisch keine Rückstellkräfte bzw. -momente auf die Lenkwelle 23.

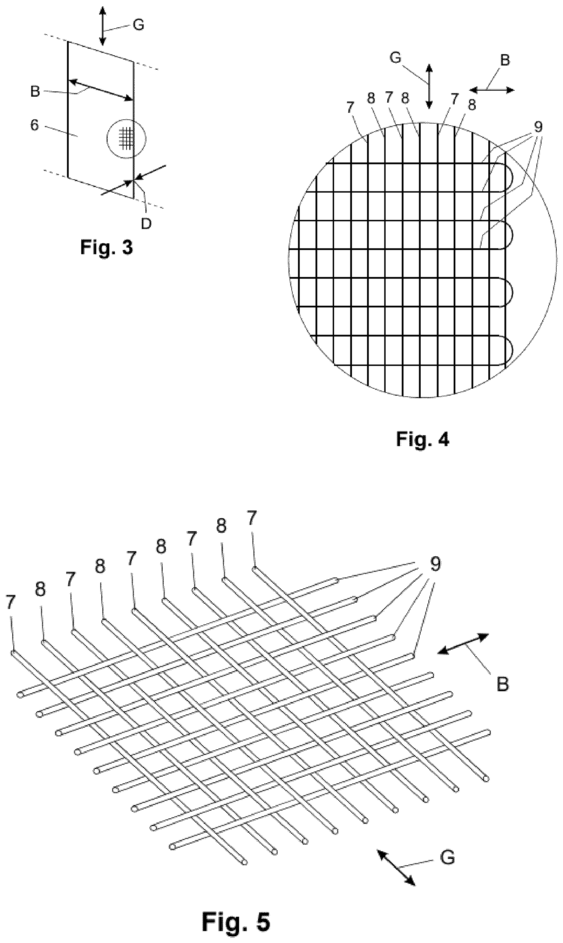

In Fig. 3 ist ein Längsabschnitt des Gurtelements 6 gezeigt. Darin ist auch die Gurtdicke D eingezeichnet, die senkrecht zu der in Gurtrichtung G verlaufenden Gurtlänge und der Gurtbreite B eine deutlich kleinere Gurtdicke D aufweist, die einem Bruchteil der Gurtbreite B entspricht.

In Fig. 4 ist der in Fig. 3 eingekreiste Ausschnitt des Gewebes in einer Draufsicht normal zu seiner flächigen Erstreckung, d.h. senkrecht zur Gurtrichtung G und Gurtbreite B, stark vergrößert dargestellt. Dabei ist die Gewebestruktur schematisch dargestellt.

Das Gewebe weist in der Gurtrichtung G verlaufende erste Kettfäden 7 und zweite Kettfäden 8 auf, die quer, in Richtung der Gurtbreite B, abwechselnd nebeneinander angeordnet sind.

Die Kettfäden 7, 8 sind mit quer zur Gurtrichtung G, also in Richtung der Gurtbreite B verlaufenden Schussfäden 9 verwoben.

Es kann eine Köperbindung 2/2 realisiert sein, wie in der ausschnittweisen schematischen perspektivischen Ansicht eines Gewebeabschnitts gemäß Fig. 5 dargestellt ist.

Erfindungsgemäß sind die ersten Kettfäden 7 aus einem hochmolekularen Polymer, bevorzugt einem ultrahochmolekularen Polyethylen (UHMW-PE) ausgebildet, und die zweiten Kettfäden 8 aus einem Flüssigkristallpolymer. Beide Arten von Kettfäden 7 und 8 sind bevorzugt jeweils als Faserstränge aus einer Vielzahl von einzelnen Fasern ausgebildet. Dadurch können eine besonders hohe Flexibilität und geringe elastische Rückstellwirkung bei einer Biegung quer zur flächigen Erstreckung realisiert werden.

Die Schussfäden 9 können als Fasern oder Faserstränge aus Polyethylen ausgebildet sein.

### Bezugszeichenliste

- 1: Lenksäule
- 2: Stelleinheit
- 21: Lenksäulengehäuse
- 22: Mantelrohr
- 23: Lenkwelle
- 24: Anschlussabschnitt
- 3: Trageinheit
- 31: Befestigungsöffnungen
- 32: Schwenkachse
- 33: Seitenwangen
- 34: Langloch
- 4: Spanneinrichtung
- 41: Spannbolzen
- 42: Spannhebel
- 43: Spanngetriebe
- 5: Umdrehungsbegrenzer
- 51: Trommel
- 52: Innenmantel
- 53: Wickelkern
- 54: Außenmantel
- 55: Querschlitz
- 56, 57: Querschlitze
- 6: Gurtelement
- 61, 62: Bandabschnitte
- 63: Bandabschnitt
- 7: erste Kettfäden
- 8: zweite Kettfäden
- 9: Schussfäden

- L: Längsachse
- H: Höhenrichtung
- G: Gurtrichtung
- B: Gurtbreite
- D: Gurtdicke

## Patentansprüche

1. Lenksäule (1) für ein Kraftfahrzeug, umfassend eine relativ zu einem Gehäuse (21) um ihre Längsachse (L) drehbar gelagerte Lenkwelle (23) und einen zur Begrenzung der Rotation der Lenkwelle (23) relativ zum Gehäuse (21) ausgebildeten Umdrehungsbegrenzer (5), der ein an dem Gehäuse (21) fixiertes, in einer Gurtrichtung (G) langgestrecktes und quer dazu in seiner Gurtbreite (B) flach erstrecktes, flexibel verformbares Gurtelement (6) aufweist, welches auf einem mit der Lenkwelle (23) verbundenen Wickelkern (53) aufwickelbar ist, und welches ein Gewebe aus Kunststofffasern (7, 8, 9) aufweist, die in Gurtrichtung (G) verlaufende Kettfäden (7, 8) umfassen, die mit quer zur Gurtrichtung (G) verlaufenden Schussfäden (9) verwoben sind,
**dadurch gekennzeichnet,**
**dass** die Kettfäden (7, 8) erste Kettfäden (7) aufweisen, die ein erstes Polymermaterial aufweisen, und zweite Kettfäden (8) aufweisen, die ein zweites Polymermaterial aufweisen.

2. Lenksäule nach Anspruch 1, **dadurch gekennzeichnet, dass** die Kettfäden (7, 8) erste Kettfäden (7) aus einem hochmolekularen Polymer und zweite Kettfäden (8) aus einem Flüssigkristallpolymer aufweisen.

3. Lenksäule nach Anspruch 2, **dadurch gekennzeichnet, dass** das hochmolekulare Polymer ein ultrahochmolekulares Polyethylen aufweist.

4. Lenksäule nach Anspruch 3, **dadurch gekennzeichnet, dass** das Flüssigkristallpolymer ein aromatisches Polyamid oder ein aromatisches Polyester aufweist.

5. Lenksäule nach einem der vorangehenden Ansprüche, **dadurch gekennzeichnet, dass** eine Mehrzahl von ersten Kettfäden (7) quer zur Gurtrichtung (G) nebeneinander im Wechsel mit zweiten Kettfäden (8) angeordnet sind.

6. Lenksäule nach einem der vorangehenden Ansprüche, **dadurch gekennzeichnet, dass** die relative Anzahl der ersten (7) und zweiten Kettfäden (8) in einem Verhältnis zwischen 7:10 und 13:10 steht.

7. Lenksäule nach einem der vorangehenden Ansprüche, **dadurch gekennzeichnet, dass** die Kettfäden (7, 8) jeweils als Faserstränge aus einer Mehrzahl von Fasern ausgebildet sind.

8. Lenksäule nach einem der vorangehenden Ansprüche, **dadurch gekennzeichnet, dass** die Schussfäden (9) aus einem von dem Kunststoff der Kettfäden (7, 8) unterschiedlichen Polymermaterial ausgebildet sind.

9. Lenksäule nach einem der vorangehenden Ansprüche, **dadurch gekennzeichnet, dass** die Schussfäden (9) aus Polyester ausgebildet sind.

10. Lenksäule nach einem der vorangehenden Ansprüche, **dadurch gekennzeichnet, dass** das Gewebe eine Köperbindung aufweist.

## Claims

1. Steering column (1) for a motor vehicle, comprising a steering shaft (23) that is mounted so as to be rotatable about its longitudinal axis (L) relative to a housing (21), and a rotation limiter (5) which is designed to limit the rotation of the steering shaft (23) relative to the housing (21) and has a flexibly deformable belt element (6) which is fixed to the housing (21), is elongate in a belt direction (G), extends in a flat manner transversely thereto in terms of its belt width (B), is able to be wound on a winding core (53) connected to the steering shaft (23), and comprises a fabric made of plastics fibres (7, 8, 9) which comprise warp threads (7, 8) extending in the belt direction (G) which are woven together with weft threads (9) extending transversely to the belt direction (G),
**characterized**
**in that** the warp threads (7, 8) comprise first warp threads (7) which comprise a first polymer material and second warp threads (8) which comprise a second polymer material.

2. Steering column according to Claim 1, **characterized in that** the warp threads (7, 8) comprise first warp threads (7) made of a high molecular weight polymer and second warp threads (8) made of a liquid crystal polymer.

3. Steering column according to Claim 2, **characterized in that** the high molecular weight polymer comprises an ultra-high molecular weight polyethylene.

4. Steering column according to Claim 3, **characterized in that** the liquid crystal polymer comprises an aromatic polyamide or an aromatic polyester.

5. Steering column according to any of the preceding claims, **characterized in that** a plurality of first warp threads (7) are arranged alongside one another transversely to the belt direction (G) in alternation with second warp threads (8).

6. Steering column according to any of the preceding claims, **characterized in that** the relative number of first (7) and second warp threads (8) is in a ratio of between 7:10 and 13:10.

7. Steering column according to any of the preceding claims, **characterized in that** the warp threads (7, 8) are each in the form of fibre strands made up of a plurality of fibres.

8. Steering column according to any of the preceding claims, **characterized in that** the weft threads (9) are made from a polymer material different from the plastic of the warp threads (7, 8).

9. Steering column according to any of the preceding claims, **characterized in that** the weft threads (9) are made from polyester.

10. Steering column according to any of the preceding claims, **characterized in that** the fabric comprises a twill weave.

## Revendications

1. Colonne de direction (1) pour un véhicule automobile, comprenant un arbre de direction (23) monté de manière rotative autour de son axe longitudinal (L) par rapport à un boîtier (21) et un limiteur de rotation (5) conçu pour limiter la rotation de l'arbre de direction (23) par rapport au boîtier (21), qui comporte un élément de sangle (6) fixé au boîtier (21), allongé dans une direction de sangle (G) et s'étendant de manière plate transversalement à celle-ci dans sa largeur de sangle (B), déformable de manière flexible, lequel est enroulable sur un noyau d'enroulement (53) relié à l'arbre de direction (23), et lequel comporte un tissu constitué de fibres synthétiques (7, 8, 9), qui comprennent des fils de chaîne (7, 8) s'étendant dans la direction de sangle (G), lesquels sont tissés avec des fils de trame (9) s'étendant transversalement à la direction de sangle (G),
**caractérisée en ce**
**que** les fils de chaîne (7, 8) comprennent des premiers fils de chaîne (7), qui comportent un premier matériau polymère, et comprennent des seconds fils de chaîne (8), qui comportent un second matériau polymère.

2. Colonne de direction selon la revendication 1, **caractérisée en ce que** les fils de chaîne (7, 8) comprennent des premiers fils de chaîne (7) constitués d'un polymère à haut poids moléculaire et des seconds fils de chaîne (8) constitués d'un polymère à cristaux liquides.

3. Colonne de direction selon la revendication 2, **caractérisée en ce que** le polymère à haut poids moléculaire comporte un polyéthylène à ultra-haut poids moléculaire.

4. Colonne de direction selon la revendication 3, **caractérisée en ce que** le polymère à cristaux liquides comporte un polyamide aromatique ou un polyester aromatique.

5. Colonne de direction selon l'une des revendications précédentes, **caractérisée en ce qu'**une pluralité de premiers fils de chaîne (7) sont disposés côte à côte transversalement à la direction de sangle (G) en alternance avec des seconds fils de chaîne (8).

6. Colonne de direction selon l'une des revendications précédentes, **caractérisée en ce que** le nombre relatif des premiers (7) et des seconds fils de chaîne (8) est dans un rapport compris entre 7:10 et 13:10.

7. Colonne de direction selon l'une des revendications précédentes, **caractérisée en ce que** les fils de chaîne (7, 8) sont chacun réalisés sous forme de faisceaux de fibres constitués d'une pluralité de fibres.

8. Colonne de direction selon l'une des revendications précédentes, **caractérisée en ce que** les fils de trame (9) sont réalisés à partir d'un matériau polymère différent de la matière synthétique des fils de chaîne (7, 8).

9. Colonne de direction selon l'une des revendications précédentes, **caractérisée en ce que** les fils de trame (9) sont réalisés en polyester.

10. Colonne de direction selon l'une des revendications précédentes, **caractérisée en ce que** le tissu comporte une armure sergé.
